# EUROPÄISCHE PATENTSCHRIFT

(11) **EP 1 249 366 B1**
(45) Veröffentlichungstag und Bekanntmachung des Hinweises auf die Patenterteilung: **08.10.2003**
(21) Anmeldenummer: 02005937.4
(22) Anmeldetag: 15.03.2002
(51) Int. Cl.: B60R 9/045

(54) **Kraftfahrzeug mit einem Dachreling-Trägersystem**
Motor vehicle with support system for vehicle roof rails
Véhicule à moteur avec système de support pour des rails de toit

(30) Priorität: 06.04.2001 DE 10117122
(43) Veröffentlichungstag der Anmeldung: 16.10.2002
(73) Patentinhaber: AUDI AG, 85045 Ingolstadt (DE)
(72) Erfinder: Roiger, Ernst, 85080 Gaimersheim (DE); Janda, Stefan, 85072 Eichstätt (DE)
(74) Vertreter: Engelhardt, Harald

(56) Entgegenhaltungen:
- DE-A- 2 939 672
- DE-A- 19 803 210
- US-A- 3 181 753
- US-A- 3 375 959

## Beschreibung

Die Erfindung betrifft ein Kraftfahrzeug mit einem Dachreling-Trägersystem nach dem Oberbegriff des Anspruchs 1.

Bei einem allgemein bekannten Kraftfahrzeug mit einem Dachreling-Trägersystem, insbesondere bei einem Kombifahrzeug, besteht das Dachreling-Trägersystem aus an beiden Längsseiten eines Fahrzeugdachs fest angebrachten fahrzeugäußeren Relingschienen und wenigstens zwei Tragschienen, die in Fahrzeugquerrichtung und beabstandet jeweils mit den Relingschienen lösbar verbunden sind.

Es sind Dachreling-Systeme allgemein bekannt, bei denen solche lösbaren Verbindungen für die Tragschienen als Einsteckverbindungen ausgeführt sind, wobei an den Tragschienen endseitige Einsteckelemente in zugeordnete Längsnuten der Relingschienen einschiebbar und fixierbar sind. Zudem sind Dachreling-Trägersysteme bekannt, bei denen diese lösbaren Verbindungen mittels Lagerböcken herstellbar sind, die jeweils endseitig an den Tragschienen angebracht sind und die Klemmelemente für eine lösbare Verbindung mit den Relingschienen aufweisen.

Zudem enthält das Kraftfahrzeug einen fahrzeuginneren Laderaum mit einem zumindest in Teilbereichen ebenen Laderaumboden. Für eine gute Belademöglichkeit durch eine öffenbare Heckklappe liegen regelmäßig insbesondere bei Kombifahrzeugen große Laderäume mit großflächigen ebenen Laderaumböden vor.

Fest am Fahrzeugdach angebrachte Relingschienen können vorteilhaft einfach und mit wenigen Handgriffen mit den Tragschienen zu einem praktischen Dachträger-System mit großer Tragfähigkeit ergänzt werden. Beim normalen Fahrzeugbetrieb ohne Verwendung der Dachträgerfunktion ist es zweckmäßig, die Tragschienen von den Relingschienen abzunehmen, da bei montierten Tragschienen der Luftwiderstand und damit die Fahrgeräusche und der Kraftstoffverbrauch erhöht sind und zudem die Optik gestört sein kann.

Ein bekanntes Problem ergibt sich in Verbindung mit dem Verstauen der von den Relingschienen abgenommenen Tragschienen: falls diese außerhalb des Fahrzeugs beispielsweise in einer Garage verstaut werden, stehen sie für einen aktuellen jedoch nicht geplanten Bedarf meist nicht zur Verfügung. Zudem besteht die Gefahr, dass die Tragschienen verlorengehen oder anderweitig benutzt werden und dadurch nicht mehr zur Verfügung stehen. Werden die Tragschienen dagegen im Fahrzeug mitgeführt, stellen diese als lange und klappernde Teile ohne Funktion im Fahrzeuginneren eine Behinderung und Belästigung dar.

Weiter ist ein Lade- und Transportsystem für die Anordnung in einem Laderaum eines Kombifahrzeugs bekannt (DE 198 03 210 C2) bei dem auf dem Laderaumboden und an einer abklappbaren Heckklappe Führungsschienen für eine Ladeplattform angebracht sind. Diese Ladeplattform greift mit Rollen in die Führungsschienen ein und kann für eine vereinfachte Beladung aus dem Bereich des Laderaums über die abgeklappte Heckklappe herausgefahren und nach dem Beladen in den Laderaum wieder eingeschoben werden. Wenn die Ladeplattform im Laderaum nicht benötigt wird, kann diese herausgenommen und mittels Halterungen auf dem Fahrzeugdach befestigt und mitgeführt werden. Ein Dachreling-Trägersystem mit Relingschienen und abnehmbaren Tragschienen liegt hier nicht vor.

Ein gattungsgemäßes, kombiniertes Dachreling-Trägersystem, das auch im Laderaum eines kombifahrzeuges eingesetzt werden kann ist aus US-A-3375959 bekannt. Aufgabe der Erfindung ist es, ein gattungsgemäßes Kraftfahrzeug mit einem Dachreling-Trägersystem so weiterzubilden, dass abgenommene Tragschienen einfach und komfortabel ggf. mit weiteren Funktionen im Fahrzeug mitführbar sind.

Diese Aufgabe wird mit den Merkmalen des Anspruchs 1 gelöst.

Gemäß Anspruch 1 sind im Laderaumboden des Laderaums der Gestalt der Tragschienen angepasste Aufnahmekanäle eingelassen, in die die Tragschienen einlegbar sind dergestalt, dass sie im Ladeboden bodenflächenbündig integriert sind.

Damit liegen die abgenommenen Tragschienen klapperfrei und ohne zu verrutschen in den Aufnahmekanälen im Ladeboden ein. Durch die Bodenflächenbündigkeit gehen zudem von den einliegenden Tragschienen weder Behinderungen beim Beladen aus noch besteht die Gefahr, dass durch die einliegenden Tragschienen möglicherweise mitgeführtes Gepäck beschädigt wird. Da erfindungsgemäß die abgenommenen Tragschienen einfach und komfortabel, ladebodenintegriert mitführbar sind, stehen diese für eine Montage an den Relingschienen für die Funktion des Dachreling-Trägersystems vorteilhaft immer, auch bei unvorhergesehenen Einsatzfällen zur Verfügung. Das Problem, dass abgenommene Tragschienen außerhalb des Fahrzeugs verstaut werden und bei Bedarf nicht auffindbar sind oder bei einem unvorhergesehenen Bedarf nicht zur Verfügung stehen, stellt sich bei der erfindungsgemäßen Anordnung und Verstauung nicht mehr.

In einer besonders bevorzugten Ausführungsform nach Anspruch 2 umfasst das Dachreling-Trägersystem zwei Tragschienen, die jeweils in Aufnahmekanälen im linken Seitenbereich und im rechten Seitenbereich des Laderaumbodens untergebracht werden können. Bei dieser Anordnung der abgenommenen Tragschienen zu beiden Seiten des Laderaumbodens können diese weitere Funktionen für eine Verzurrung von Ladegutstücken und für eine Gepäcksicherung übernehmen.

Dazu wird mit Anspruch 3 vorgeschlagen, in den Aufnahmekanälen und/oder im Bereich der Aufnahmekanäle lösbare Halterungen für eine lösbare Fixierung eingelegter Tragschienen anzubringen, so dass die im Laderaumboden fixierten Tragschienen als stabile Verankerungen für eine Ladegutsicherung verwendbar sind. Zweckmäßig bestehen solche lösbare Halterungen gemäß Anspruch 4 jeweils aus einer am vorderen Aufnahmekanalende angeordneten Einsteckverbindung und am hinteren Aufnahmekanalende angeordneten Verriegelung. Die jeweils vordere Einsteckverbindung braucht damit nicht unmittelbar zugänglich sein, da die lange Tragschiene dort einfach eingeschoben werden kann, während eine hintere Verriegelung beispielsweise durch eine Heckklappe einfach und bequem zugänglich ist.

In an sich bekannter Weise sind nach Anspruch 5 in die Tragschienen noch oben offene Nuten mit vorzugsweise einem hinterschnittenen Nutenprofil zum Einstecken von unterschiedlichen Halteelementen angebracht. Solche Halteelemente sind beispielsweise an sich bekannte Fahrradständer, Bootsständer, Skiträger oder Halteösen, die mit Steckschuhen in die Nuten der Tragschienen einsteckbar und verrastbar sind. In diese Nuten können einfach auch VerzurrÖsen mit zugeordneten Steckschuhen eingesteckt werden, die sowohl beim Dachtransport als auch im Laderaum für eine Gepäckfixierung und Ladegutsicherung vorteilhaft nutzbar sind.

Gemäß einer besonders bevorzugten Ausführungsform nach Anspruch 6 sind in den einander zugewandten Seitenwandflächen der beiden Relingschienen wenigstens bereichsweise Längsnute eingebracht, in denen die Tragschienen mit entsprechend zuordenbaren und als Einsteckelemente ausgebildeten Tragschienenenden einschiebbar und fixierbar sind. Derartige Tragschienen brauchen zur Ausbildung der Tragschienenenden als Einsteckelemente nicht oder allenfalls nur gering modifiziert werden, so dass auch eine einfache Integration dieser Tragschienen in die Aufnahmekanäle möglich ist. Zudem ergibt sich hier ein besonders vorteilhafter, einen eleganten optischen Gesamteindruck vermittelnder Aufbau, bei dem die Gefahr, dass bei montierten Tragschienen der Luftwiderstand und damit die Fahrgeräusche und der Kraftstoffverbrauch erhöht sind erheblich reduziert ist.

Bei Dachreling-Trägersystemen, bei denen die Tragschienen endseitige Lagerböcke aufweisen wird mit Anspruch 7 vorgeschlagen, entsprechende Vertiefungen zur Aufnahme der Lagerböcke an den Aufnahmekanalenden vorzusehen, so dass auch bei einer solchen Ausführungsform eine ladebodenflächenbündige Aufnahme der Tragschienen möglich ist.

Die erfindungsgemäße Mitführung der Tragschienen ist grundsätzlich bei allen Kraftfahrzeugen mit einem Dachreling-Trägersystem möglich. Ein bevorzugter Anwendungsfall ist gemäß Anspruch 8 in einem Kombifahrzeug mit Heckklappe gegeben.

Anhand einer Zeichnung wird die Erfindung näher erläutert.

Es zeigen:
- Fig. 1: eine schematische, perspektivische Rückansicht eines Kraftfahrzeugs mit einem erfindungsgemäßen Dachreling-Trägersystem, und
- Fig. 2: eine schematische, vergrößerte Schnittansicht entlang der Linie A-A der Fig. 1.

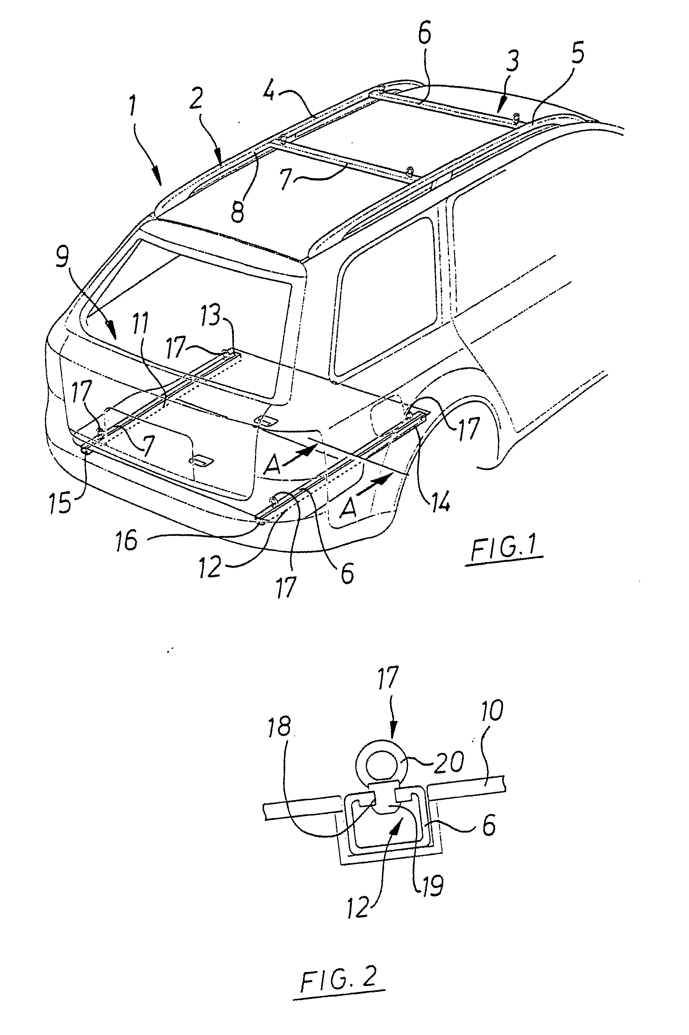

In der Fig. 1 ist schematisch und perspektivisch eine Heckansicht eines als Kombifahrzeug ausgebildeten Kraftfahrzeugs 1 mit einem Dachreling-Trägersystem 2 gezeigt.

Dieses Dachreling-Trägersystem 2 umfasst an beiden Längsseiten eines Fahrzeugdachs 3 jeweils eine dort angebrachte, fahrzeugäußere Relingschiene 4, 5.

Wie dies der Fig. 1 zudem weiter entnommen werden kann, umfasst das Dachreling-Trägersystem zudem hier beispielhaft zwei Trageschienen 6, 7, die in Fahrzeugquerrichtung gesehen und beabstandet voneinander jeweils endseitig mit den Relingschienen 4, 5 lösbar verbindbar sind. Dazu ist in den einander zugewandten Seitenwandflächen der beiden Relingschienen 4, 5 eine sich vorzugsweise über die gesamte Relinglängserstreckung durchgehende Längsnut 8 eingebracht, in die die Tragschienen 6, 7 mit entsprechend den Längsnuten 8 zuordenbaren und als Einsteckelemente ausgebildeten Tragschienenenden einschiebbar und fixierbar sind, was in der Darstellung der Fig. 1 jedoch nur äußerst schematisch und nicht im Detail dargestellt ist.

Das Kombifahrzeug 1 umfasst zudem einen fahrzeuginneren Laderaum 9 mit einem ebenen Laderaumboden 10. In diesen Laderaumboden 10 ist im linken Seitenbereich und im rechten Seitenbereich je ein der Gestalt der Tragschienen 6, 7 angepasster Aufnahmekanal 11, 12 eingelassen, in die die von den Relingschienen 4, 5 abgenommenen Trageschienen 6, 7 so eingelegt werden können, dass sie im Laderaumboden 10 bodenflächenbündig integriert sind. In der Darstellung der Fig. 1 sind hier lediglich aus Erläuterungsgründen die Tragschienen 6, 7 sowohl im Bereich der Relingschienen 4, 5 als auch in die Aufnahmekanäle 11, 12 eingesetzt dargestellt.

Inn den Aufnahmekanälen 11, 12 ist vorzugsweise eine lösbare Halterung für eine lösbare Fixierung der eingelegten Trageschienen 6, 7 angebracht, wobei die Halterungen dann jeweils aus einer am vorderen Aufnahmekanalende 13, 14 angeordneten Einsteckverbindung und einer am hinteren Aufnahmekanalende 15, 16 angeordneten Verriegelung bestehen kann, was hier jedoch nicht dargestellt ist.

Wie dies insbesondere aus der Fig. 2 ersichtlich ist, die eine schematische und vergrößerte Schnittansicht entlang der Linie A-A der Fig. 1 zeigt, weisen die Trageschienen 6, 7 wenigstens bereichsweise nach oben offene Nuten 18 zum Einstecken von Haltelementen 17 auf. Die in den Figuren 1 und 2 dargestellten Halteelemente 17 weisen jeweils Steckschuhe 19 auf, mit denen die Halteelemente 17 in die Nuten 18 der Tragschienen 6, 7 einsteckbar und verrastbar sind. Die Halteelemente 17 umfassen des weiteren Ösenteile 20, die sowohl beim Dachtransport als auch im verstauten Zustand im Laderaum 9 für eine Gepäckfixierung und Ladegutsicherung genützt werden können.

## Patentansprüche

1. Kraftfahrzeug (1) mit einem Dachreling-Trägersystem (2), mit an beiden Längsseiten eines Fahrzeugdachs fest angebrachten fahrzeugäußeren Relingschienen (4,5) und wenigstens zwei Trageschienen (6,7), die in Fahrzeugquerrichtung und beabstandet jeweils endseitig mit den Relingschienen (4,5) lösbar verbindbar sind, und
mit einem fahrzeuginneren Laderaum (9) mit einem zumindest in Teilbereichen ebenen Laderaumboden (10), in dem Aufnahmekanäle (11, 12) eingelassen sind
**dadurch gekennzeichnet, dass** die Aufnahmekaneile
der Gestalt der Trageschienen (6, 7) angepasst sind, und in diese die von den Relingschienen (4, 5) abgenommenen Trageschienen (6, 7) in diese einlegbar sind, dergestalt, dass sie im Laderaumboden (10) bodenflächenbündig integriert sind.

2. Kraftfahrzeug nach Anspruch 1, **dadurch gekennzeichnet, dass** im linken Seitenbereich und im rechten Seitenbereich des Laderaumbodens (10) je ein Aufnahmekanal (11, 12) angebracht ist.

3. Kraftfahrzeug nach Anspruch 1 oder 2, **dadurch gekennzeichnet, dass** in den Aufnahmekanälen (11, 12) und/oder im Bereich der Aufnahmekanäle (11, 12) lösbare Halterungen für eine lösbare Fixierung eingelegter Trageschienen (6, 7) angebracht sind.

4. Kraftfahrzeug nach Anspruch 3, **dadurch gekennzeichnet, dass** die Halterungen jeweils aus einer am vorderen Aufnahmekanalende (13, 14) angeordneten Einsteckverbindung und am hinteren Aufnahmekanalende (15, 16) angeordneten Verriegelung besteht.

5. Kraftfahrzeug nach einem der Ansprüche 1 bis 4, **dadurch gekennzeichnet, dass** die Trageschienen (6, 7) nach oben offene Nuten (18) zum Einstecken von Halteelementen (17) aufweisen.

6. Kraftfahrzeug nach einem der Ansprüche 1 bis 5, **dadurch gekennzeichnet, dass** in den einander zugewandten Seitenwandflächen der beiden Relingschienen (4, 5) wenigstens bereichsweise eine Längsnut (8) eingebracht ist, in die die Tragschienen (6, 7) mit entsprechend zuordenbaren und als Einsteckelemente ausgebildeten Tragschienenenden einschiebbar und fixierbar sind.

7. Kraftfahrzeug nach einem der Ansprüche 1 bis 5, **dadurch gekennzeichnet,**
**dass** an den Enden der Trageschienen Lagerböcke für eine lösbare Verbindung mit den Relingschienen angebracht sind, und
**dass** entsprechende Vertiefungen zur Aufnahme dieser Lagerböcke an den Aufnahmekanalenden angeordnet sind.

8. Kraftfahrzeug nach einem der Ansprüche 1 bis 6, **dadurch gekennzeichnet, dass** das Kraftfahrzeug (1) ein Kombifahrzeug mit einem über eine Heckklappe zugänglichen Laderaum (9) ist.

## Claims

1. Motor vehicle (1) with a roof-rail carrier system (2), with side rails (4, 5) permanently mounted outside the vehicle on both longitudinal sides of the vehicle roof and at least two carrier rails (6, 7) removably connectable by their ends, in the transverse direction of the vehicle and spaced apart, to the side rails (4, 5), and
with a load space (9) inside the vehicle with a floor (10) which is level at least in partial regions and in which holder channels (11, 12) are recessed,
**characterized in that** the holder channels (11, 12) are adapted to the form of the carrier rails (6, 7), and the carrier rails after having been removed from the side rails (4, 5) can be inserted into the holder channels so that they lie flush with and merge into the load-space floor (10).

2. Motor vehicle according to Claim 1, **characterized in that** one holder channel (11, 12) is fitted in each of the left and right side regions of the load-space floor (10).

3. Motor vehicle according to Claim 1 or Claim 2, **characterized in that** releasable fastenings for releasably fixing inserted carrier rails (6, 7) are fitted in the holder channels (11, 12) and/or in the region of the holder channels (11, 12).

4. Motor vehicle according to Claim 3, **characterized in that** each fastening consists of a plug-in connection arranged at the forward end (13, 14) of the holder channel and a latch arranged at the rear end (15, 16) of the holder channel.

5. Motor vehicle according to any one of Claims 1 to 4, **characterized in that** the carrier rails (6, 7) have upwards-open grooves (18) for the insertion of holder elements (17).

6. Motor vehicle according to any one of Claims 1 to 5, **characterized in that** at least one longitudinal slot (8) is locally formed in the side wall faces of the two side rails (4, 5) facing each other, into which the carrier rails (6, 7) are insertable and fixable by suitably engageable carrier-rail ends configured as plug-in elements.

7. Motor vehicle according to any one of Claims 1 to 5, **characterized in that**
bearing blocks are fitted to the ends of the carrier rails for releasable connection to the side rails, and
corresponding recesses are arranged at the ends of the holder channels to receive these bearing blocks.

8. Motor vehicle according to any one of Claims 1 to 6, **characterized in that** the motor vehicle (1) is an estate car with a load space (9) accessible through a tailgate.

## Revendications

1. Véhicule à moteur (1) muni d'un système support de rails de toit (2), avec des glissières à rails (4, 5) extérieures au véhicule, montées à demeure sur les deux côtés longitudinaux d'un toit de véhicule, et au moins deux glissières support (6, 7) montées dans la direction transversale du véhicule et à distance, en étant susceptibles d'être reliées de façon désolidarisable chacune, à une extrémité, aux glissières à rails (4, 5), et
avec un espace de chargement (9) intérieur au véhicule, muni d'un fond d'espace de chargement (10), plan au moins dans des zones partielles, espace de chargement dans lequel sont insérés des canaux de logement (11, 12),
**caractérisé en ce que** les canaux de logement sont adaptés à la forme des glissières support (6, 7) et les glissières support (6, 7), enlevées des glissières à rails (4, 5), sont susceptibles d'être insérées dans ces canaux de logement, de manière à être intégrées, en affleurement avec la surface de fond, dans le fond de l'espace de chargement (10).

2. Véhicule à moteur selon la revendication 1, **caractérisé en ce que** chaque fois un canal de logement (11, 12) est aménagé dans la zone latérale gauche et dans la zone latérale droite du fond d'espace de chargement (10).

3. Véhicule à moteur selon la revendication 1 ou 2, **caractérisé en ce que** des dispositifs de fixation désolidarisables, pour permettre de fixer de façon désolidarisable les glissières support (6, 7) insérées, sont montés dans les canaux de logement (11, 12) et/ou dans la zone des canaux de logement (11, 12).

4. Véhicule à moteur selon la revendication 3, **caractérisé en ce que** les dispositifs de fixation sont chacun formés d'une liaison à en fichage, disposée sur l'extrémité avant (13, 14) du canal de logement, et d'un verrouillage, disposé sur l'extrémité arrière (15, 16) du canal de logement.

5. Véhicule à moteur selon l'une des revendications 1 à 4, **caractérisé en ce que** les glissières support (6, 7) présentent des rainures (18) ouvertes vers le haut, afin d'enficher des éléments de maintien (17).

6. Véhicule à moteur selon l'une des revendications 1 à 5, **caractérisé en ce qu'**une rainure longitudinale (8), dans laquelle les glissières support (6, 7) sont susceptibles d'être introduites et fixées à des extrémités de glissières support susceptibles d'être associées de manière correspondante et réalisées en tant qu'éléments à enfichage, est aménagée, au moins par zones, dans les deux faces de paroi latérale, tournées l'une vers l'autre, des deux glissières à rails (4, 5).

7. Véhicule à moteur selon l'une des revendications 1 à 5, **caractérisé en ce qu'**aux extrémités des glissières support sont prévus des blocs de palier, pour assurer une liaison désolidarisable aux glissières à rails, et
**en ce que** des creusements correspondants, devant recevoir ces blocs de palier, sont disposés sur les extrémités de canal de logement.

8. Véhicule à moteur selon l'une des revendications 1 à 6, **caractérisé en ce que** le véhicule à moteur (1) est un véhicule commercial avec un espace de chargement (9) accessible par un hayon (9).
